# EUROPEAN PATENT SPECIFICATION

(11) **EP 0 347 920 B1**
(45) Date of publication and mention of the grant of the patent: **28.09.1994**
(21) Application number: 89111406.8
(22) Date of filing: 22.06.1989
(51) Int. Cl.: C04B 35/58

(54) **High strength high toughness TiB2 ceramics**
Hochfeste hochzähe TiB2-Keramik
Céramiques de TiB2 à haute solidité et ténacité

(30) Priority: 22.06.1988 JP 152378/88
(43) Date of publication of application: 27.12.1989
(73) Proprietor: NKK CORPORATION, Tokyo (JP)
(72) Inventor: Nishio, Hiroaki c/o NKK CORPORATION, Tokyo (JP); Torizuka, Shiro c/o NKK CORPORATION, Tokyo (JP)
(74) Representative: Grünecker, Kinkeldey, Stockmair & Schwanhäusser Anwaltssozietät

(56) References cited:
- JP-A-58 130 169

## Description

TiB₂ ceramics are hard ceramics, and utilized for cutting tools, plastic working tools, high wear resistance parts and the like. The present invention relates to a novel TiB₂ ceramics where the strength and the fracture toughness are improved.

TiB₂ has various characteristics, such as a high melting point, a high hardness and a high wear resistance. Moreover, it is excellent in high temperature anticorrosion, and is electrically conductive. Therefore, TiB₂ can be processed by electric discharge machining. Whereas, TiB₂ is inferior in flexural strength which is 196 to 294 MPa (20 to 30 kgf/mm²) and in fragility. Thereupon, various investigations were conducted in order to improve the strength of TiB₂, and for example, Japanese Patent No. 1,096,092 discloses to improve the flexural strength and the fragility by adding nickel boride, cobalt boride, iron boride or the like as binder. Japanese Patent KOKOKU No. 59-7688 discloses to improve the strength as well as oxidation resistance and heat resistance by adding zirconium oxide such as ZrO₂, ZrO, ZrO_{0.35} or Zr₃O₁₋ₓ to TiB₂. Japanese Patent KOKOKU No. 58-57393 discloses that a composite ceramics sintered material having a high density, a high strength and excellent in oxidation resistance is obtained by adding 10 to 60 wt. % of TiB₂ to TiN. Austrian Patent Official Gazette No. 199,886 discloses that a composite sintered body of TiC and TiB₂ has a high hardness, wear resistance, anticorrosion and the like.

However, the strongest flexural strength of the above sintered bodies is only 1078 MPa (110 kgf/mm²), and the fracture toughness is insufficient. Thus, it has been desired to develop a TiB₂ having a greater strength and fracture toughness in order that TiB₂ is widely utilized as materials for various uses.

Japanese Patent Publication JP-A-58-130168 further describes a sintered ceramic material containing TiB₂, ZrO₂ and 0,001 to 10 wt% of a "cubic crystalline metallic carbide". Said document does not mention the addition of silicon carbide.

### SUMMARY OF THE INVENTION

An object of the invention is to provide a TiB₂ ceramic sintered body having a high strength and a high fracture toughness remaining the excellent qualities of TiB₂ such as high hardness, high wear resistance and high temperature anticorrosion.

The inventors have investigated in order to achieve such an object, and found that the above TiB₂ ceramic sintered body can be obtained by combining SiC and ZrO₂ with TiB₂. Thus, the present invention provides a high strength high fracture toughness TiB₂ ceramic sintered body comprising TiB₂ as the principal component, 0.5 to 30 wt. % of SiC and 2 to 40 wt. % of ZrO₂.

### DETAILED DESCRIPTION OF THE INVENTION

The raw powder of TiB₂ has preferably less impurities, and a suitable TiB₂ has a purity of more than 99 wt. %. The particle size is preferably fine, and not more than 3 »m, particularly not more than 1 »m as the mean particle size is preferred. The content of TiB₂ in the sintered body must be the greatest, and a suitable content is about 40 to 97.5 wt. %, preferably about 60 to 94 wt. %.

The raw powder of SiC has preferably less impurities, and a suitable SiC has a purity of more than 99 wt. %. The particle size is preferably fine, and not more than 3 »m, preferably not more than 1 »m as the mean particle size is preferred. The content of SiC in the sintered body is about 0.5 to 30 wt. %, and about 1 to 10 wt. % is preferred. When the content of SiC is beyond 30 wt. %, the decreases in hardness and strength are problems. While, when the content is less than 0.5 wt. %, the blending effect is insufficient.

The raw powder of ZrO₂ has preferably less impurities, and a suitable ZrO₂ has a purity of more than 99 wt. %, except additives optionally added. The particle size is preferably fine, and not more than 3 um, preferably not more than 1 um as the mean particle size is preferred. The raw powder of ZrO₂ may be in a form of sol. When ZrO₂ is stabilized in a form of tetragonal crystal, the sintered body is rendered to have a higher strength. For that purpose, ZrO₂ is preferably blended with 1 to 8 %, preferably 3 to 7 % of Y₂O₃, 1 to 4 % of MgO or 10 to 21 % of CeO₂, as the per cent by weight to ZrO₂, as a stabilizer for tetragonal crystal. Two or more kinds of tetragonal crystal stabilizers may be added. The content of ZrO₂ in the sintered body is about 2 to 40 wt. %, and 5 to 30 wt. % is preferred. When a tetragonal crystal stabilizer is contained, the content includes the weight of the stabilizer. When the content of ZrO₂ is beyond 40 wt. %, the decreases in hardness and strength are problems. While, when the content is less than 2 wt. %, the blending effect is insufficient.

The grain growth of TiB₂ can also be inhibited by adding a metal carbide other than SiC, a metal nitride, a carbonitride or a metal boride other than TiB₂. Such a component includes TiC, VC, ZrC, NbC, Cr₃C₂, TaC, TiN, Ti(C,N), TaB₂, ZrB₂, NbB₂, and the like. Two or more kinds of the above compounds may be combined. The content of the above compounds is usually less than 20 wt. %, and 0.5 to 20 wt. %, particularly 3 to 15 wt. %, is suitable.

As the preparation method of the ceramic sintered body of the invention, first, the above raw powders are uniformly mixed. The mixer is preferably a grinding type, such as ball mill, capable of grinding the whole mixed powder. When the balls of TiB₂, SiC or ZrO₂ are used, the contamination caused by the abrasion of the balls can be avoided. Subsequently, the mixed powder is formed into a molded body having a theoretical density ratio of more than about 50 %. The molded body is placed in a sintering furnace, and sintered at 1600 to 2000°C under nonoxidizing atomosphere to produce a dense sintered body. The sintered body is preferably further densified by hot isostatic pressing (HIP). The HIP is preferably conducted at 1450 to 1800 °C at more than 101.3 MPa (1000 atm) in an inert gas such as argon. While, the molded body may be sintered by capsule HIP process where the molded body is sealed with vacuum in a metal or glass capsule and HIP is conducted in a state shielded from outer gases. In this case, a dense sintered body can be obtained by the HIP at 1450 to 1800°C at 101.3 to 202.6 MPa (1000 to 2000 atm) for 1 to 2 hours.

The sintered body thus obtained has a dense structure where TiB₂, ZrO₂ and SiC are uniformly disperse. In particular, ZrO₂ is located at the grain boundary of TiB₂, and inhibits the grain growth of TiB₂. The grain size of TiB₂ is small, i.e. 1 to 3 »m, and the TiB₂ grains grow little from the raw powder. While, SiC is located not only at the grain boundary but also on the inside of both grains of TiB₂ and ZrO₂. The three-point flexural strength of the sintered body is not less than 1078 MPa (110 kgf/mm²), usually in the range of 1275 to 1570 MPa (130 to 160 kgf/mm²). The hardness is about 19620 to 29430 MPa (2000 to 3000 kgf/mm²). The fracture toughness is about 6 to 13 MPam^{0.5}, usually not less than 7 Mpam^{0.5}.

The growth rate of TiB₂ itself is high, and in the case of TiB₂ simplex, a dense sintered body is not obtained. In the sintered body of the invention, ZrO₂ not only inhibits the grain growth of TiB₂ but also improves the stregnth of the sintered body by binding it to TiB₂ strongly. The fracture toughness of the sintered body is improved by the stress-induced transformation and the residual compressive stress after transformation of ZrO₂ itself.

The greatest characteristic of the present sintered body is to contain SiC. The thermal expansion coefficient of SiC is 4 x 10⁻⁶/°C which is smaller than TiB₂ of 7 x 10⁻⁶/°C and ZrO₂ of 8 x 10⁻⁶/°C. The sintered body contracts during cooling process, and only the contract of SiC is little. Then, compressive stress is produced in SiC and the TiB₂ and the ZrO₂ around SiC, and remains in the sintered body which is remarkably strengthened by the residual compressive stress; simultaneously, the high fracture toughness is also achieved. Therefore, as shown in Examples 1 through 24, the strength and the fracture toughness of the sintered body of the invention are much greater than those of Comparative Examples 1 through 8 composed of TiB₂ and ZrO₂. Moreover, as shown in Comparative Examples 9 through 11, when the SiC content is out of the range, the effect of SiC is little.

The grain growth of TiB₂ is also inhibited by adding a metal carbide, a metal nitride, a metal carbonitride, a metal boride such as TiC, VC, ZrC, NbC, Cr₃C₂, TaC, TiN, Ti(CN), TaB₂, ZrB₂, NbB₂, and they improve the strength of the sintered body. The metal carbides, metal carbonitride, and metal nitride have an action to improve sintering ability, and the blending of them is advantageous for the production of a dense sintered body.

The ceramic sintered body of the invention is excellent in strength, hardness and fracture toughness, and it can be used for various uses such as cutting tools, plastic working tools and high wear resistance parts.

### EXAMPLES

### Example 1

87.5 wt. % of TiB₂ powder, 10 wt. % of ZrO₂ powder stabilized by adding 3.5 wt. % of Y₂O₃ (TZ-3.5Y) and 2.5 wt. % of SiC powder were mixed and ground by an attritor using zirconia balls in ethanol solvent. The mixed powder was dried by a rotary evaporator and rendered granules by passing through a sieve. The granules were uniaxially pressed and cold isostatically pressed to form a molded body having a density of about 60 %. The molded body was placed in a glass bottle capsule, and HIP was conducted at 1600°C at 202.6 MPa (2000 atm) for 2 hours. The sintered body thus obtained was dense, and a mean particle size of TiB₂ was less than 3 »m. The three components were uniformly dispersed in the sintered body. ZrO₂ grains were located around TiB₂, and SiC was located at the both grain boundaries and on the inside of both grains of TiB₂ and ZrO₂. As shown in Table 1, the sintered body had a three-point flexural strength of 1472 MPa (150 kgf/mm²), a Vickers hardness of 25310 MPa (2580 kgf/mm²) and a fracture toughnes of 7.0 MPam^{0.5}.

### Examples 2 through 15

TiB₂ powder, ZrO₂ powder added with no Y₂O₃, 3.5 wt. % of Y₂O₃ (TZ-3.5Y), 5.2 wt. % of Y₂O₃ (TZ-5.2Y) or 7.0 wt. % of Y₂O₃ (TZ-7.0Y) and SiC powder were mixed and ground in the composition shown in Table 1, and molded, similar to Example 1. Then, a glass capsule HIP was conducted under the conditions shown in Table 1. The sintered bodies obtained had a dense fine structure where the three components were uniformly dispersed, similar to Example 1. The properties of the sintered bodies are shown in Table 1.

### Examples 16 through 22

TiB₂ powder, ZrO₂ powder added with no Y₂O₃, 3.5 wt. % of Y₂O₃ (TZ-3.5Y), 5.2 wt. % of Y₂O₃ (TZ-5.2Y) or 7.0 wt. % of Y₂O₃ (TZ-7.0Y) and SiC powder were mixed and ground in the composition shown in Table 1, and subjected to uniaxial press and CIP to form a molded body having a density of about 60 %, similar to Example 1. The molded body was sintered at 1700 to 1800°C to obtain a sintered body having a density of 95 to 99 %. The sintered body was hot isostatically pressed at 1500 to 1600°C at 202.6 MPa (2000 atm) for 2 hours to obtain a dense sintered body. The sintered bodies thus obtained had a dense fine structure where the three components were uniformly dispersed, similar to Example 1. The properties of the sintered bodies are shown in Table 1.

### Example 23

85 wt. % of TiB₂ powder, 10 wt. % of ZrO₂ powder added with 2.8 wt. % of MgO and 5 wt. % of SiC were mixed and ground, and subjected to uniaxial press and CIP to form a molded body having a density of about 60 %, similar to Example 1. The molded body was treated with glass encapsulation HIP under the conditions shown in Table 1. The sintered body thus obtained was dense, and the three components having a mean particle size of less than 3 »m were uniformly dispersed therein. The properties of the sintered body are shown in Table 1. The sintered body was highly tough, and the toughness was beyond 10 MPam^{0.5}.

### Example 24

85 wt. % of TiB₂ powder, 10 wt. % of ZrO₂ powder added with 15.5 wt. % of CeO₂ and 5 wt. % of SiC were mixed and ground, and subjected to uniaxial press and CIP to form a molded body having a density of about 60 %, similar to Example 1. The molded body was treated with HIP similar to Example 23. The sintered body thus obtained had a dense and uniform fine structure similarly. The toughness was also beyond 10 MPam^{0.5}.

### Examples 25 through 47

TiB₂ powder, ZrO₂ powder added with no Y₂O₃, 3.5 wt. % of Y₂O₃ (TZ-3.5Y), 5.2 wt. % of Y₂O₃ (TZ-5.2Y) or 7.0 wt. % of Y₂O₃ (TZ-7.0Y), SiC powder and TiC, VC, ZrC, NbC, Cr₃C₂, TaC, TiN, Ti(CN), TaB₂, ZrB₂ or NbB₂ were mixed and ground in the composition shown in Table 2, and subjected to uniaxial press and CIP to form a molded body having a density of about 60 %, similar to Example 1. The molded body was sintered and hot isostatically pressed with or without a glass capsule under the conditions shown in Table 2. The sintered bodies thus obtained had a dense fine structure where the four or more components were uniformly dispersed. The properties of the sintered bodies are shown in Table 2.

### Comparative Examples 1 through 11

TiB₂ powder, ZrO₂ powder added with no Y₂O₃, 3.5 wt. % of Y₂O₃ (TZ-3.5Y), 5.2 wt % of Y₂O₃ (TZ-5.2Y) or 7.0 wt. % of Y₂O₃ (TZ-7.0Y) and SiC powder were mixed and ground in the composition shown in Table 3, and subjected to uniaxial press and CIP to form a molded body having a density of about 60 %, similar to Example 1. The molded body was treated with glass encapsulation HIP or sintering and HIP under the conditions shown in Table 3. The sintered bodies had a dense structure where the three components were uniformly dispersed. Nevertheless, the strength was weak compared with Examples of the invention, and was 1078 MPa (110 kgf/mm²) at the highest, as shown in Table 3.

**Table 1**

| Example | | Sintering Conditions | HIP Conditions | | Properties of Sintered Body | | |
|---|---|---|---|---|---|---|---|
| Composition (wt.%) | | Temperature (°C) | Temperature (°C) | Pressure (atm) | Three-Point Flexural Strength (kgf/mm²) | Hardness (kgf/mm²) | Fracture Toughness (MPam^{0.5}) |
| 1 | TiB₂-10%(TZ-3.5Y)-2.5%SiC | - | 1600 | 2000 | 150 | 2580 | 7.0 |
| 2 | TiB₂-2%(TZ-3.5Y)-2.5%SiC | - | 1600 | 2000 | 130 | 2800 | 6.2 |
| 3 | TiB₂-5%(TZ-3.5Y)-2.5%SiC | - | 1600 | 2000 | 133 | 2750 | 6.8 |
| 4 | TiB₂-10%(TZ-3.5Y)-2.5%SiC | - | 1600 | 2000 | 152 | 2500 | 7.8 |
| 5 | TiB₂-10%(TZ-3.5Y)-2.5%SiC | - | 1600 | 1000 | 146 | 2450 | 7.4 |
| 6 | TiB₂-20%(TZ-3.5Y)-2.5%SiC | - | 1600 | 2000 | 135 | 2450 | 7.0 |
| 7 | TiB₂-20%(TZ-3.5Y)-2.5%SiC | - | 1600 | 2000 | 155 | 2400 | 8.2 |
| 8 | TiB₂-30%(TZ-3.5Y)-2.5%SiC | - | 1500 | 2000 | 138 | 2150 | 9.5 |
| 9 | TiB₂-30%(TZ-3.5Y)-2.5%SiC | - | 1500 | 1000 | 135 | 2000 | 9.5 |
| 10 | TiB₂-20%(TZ-5.2Y)-2.5%SiC | - | 1600 | 2000 | 135 | 2250 | 8.0 |
| 11 | TiB₂-20%(TZ-5.2Y)-2.5%SiC | - | 1600 | 2000 | 133 | 2200 | 7.8 |
| 12 | TiB₂-40%(TZ-5.2Y)-2.5%SiC | - | 1600 | 2000 | 130 | 2000 | 9.0 |
| 13 | TiB₂-10%(TZ-7.0Y)-2.5%SiC | - | 1600 | 2000 | 140 | 2500 | 7.1 |
| 14 | TiB₂-10%ZrO₂-2.5%SiC | - | 1500 | 1000 | 139 | 2400 | 7.0 |
| 15 | TiB₂-20%ZrO₂-5%SiC | - | 1600 | 2000 | 135 | 2250 | 8.8 |
| 16 | TiB₂-10%(TZ-3.5Y)-2.5%SiC | 1800 | 1600 | 2000 | 144 | 2450 | 8.2 |
| 17 | TiB₂-20%(TZ-3.5Y)-2.5%SiC | 1700 | 1600 | 2000 | 143 | 2400 | 8.8 |
| 18 | TiB₂-20%(TZ-5.2Y)-2.5%SiC | 1700 | 1600 | 2000 | 145 | 2350 | 9.0 |
| 19 | TiB₂-5%ZrO₂-1%SiC | 1700 | 1500 | 2000 | 133 | 2550 | 7.5 |
| 20 | TiB₂-10%ZrO₂-5%SiC | 1700 | 1500 | 2000 | 139 | 2350 | 7.8 |
| 21 | TiB₂-20%ZrO₂-10%SiC | 1700 | 1500 | 2000 | 137 | 2200 | 8.4 |
| 22 | TiB₂-20%ZrO₂-30%SiC | 1700 | 1500 | 2000 | 133 | 2100 | 7.0 |
| 23 | TiB₂-10%(TZ-2.8M)-5%SiC | - | 1600 | 2000 | 115 | 2300 | 11.0 |
| 24 | TiB₂-10%(TZ-15C)-5%SiC | - | 1600 | 2000 | 116 | 2300 | 12.5 |

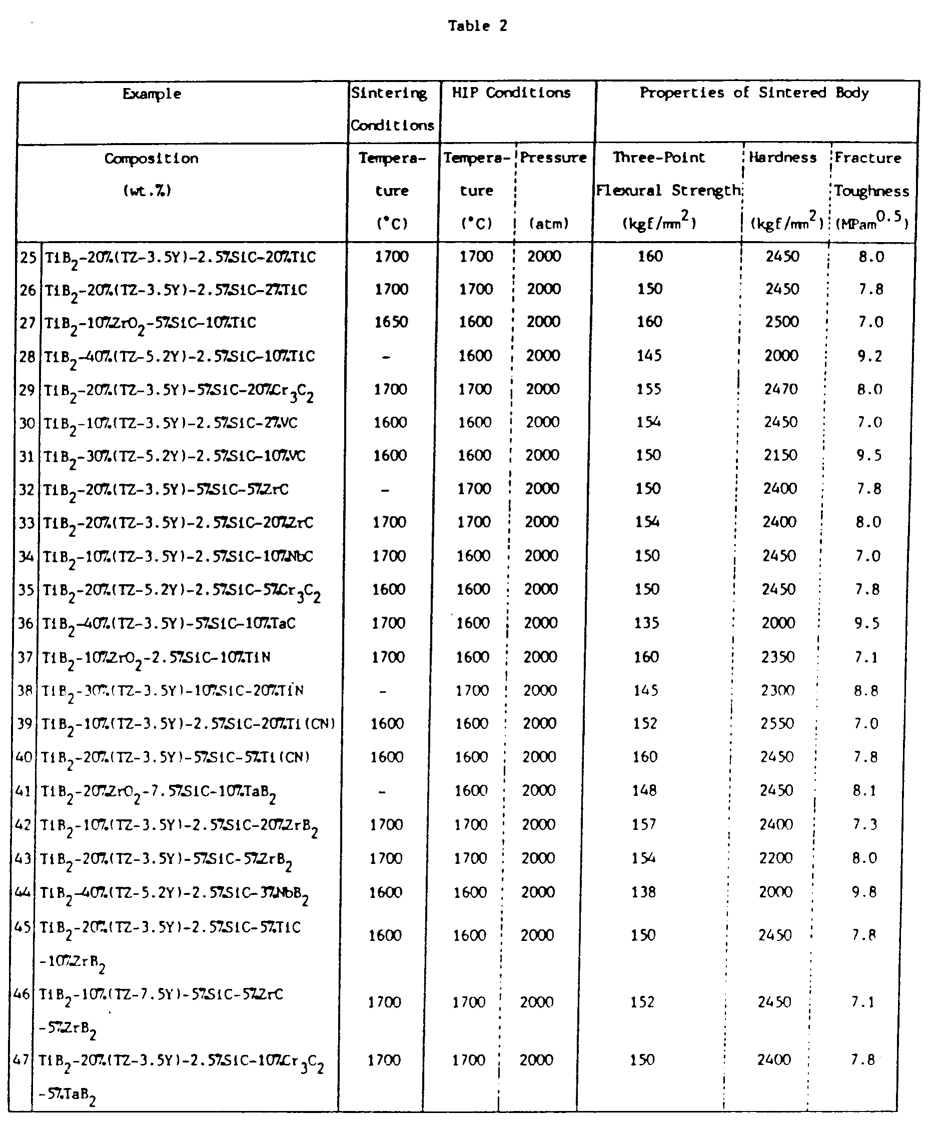

**Table 3**

| Comparative Example | | Sintering Conditions | HIP Conditions | | Properties of Sintered Body | | |
|---|---|---|---|---|---|---|---|
| Composition (wt.%) | | Temperature (°C) | Temperature (°C) | Pressure (atm) | Three-Point Flexural Strength (kgf/mm²) | Hardness (kgf/mm²) | Fracture Toughness (MPam^{0.5}) |
| 1 | TiB₂-10%ZrO₂ | - | 1600 | 2000 | 100 | 2500 | 4.2 |
| 2 | TiB₂-20%ZrO₂ | - | 1600 | 2000 | 84 | 2300 | 6.5 |
| 3 | TiB₂-30%ZrO₂ | - | 1600 | 2000 | 65 | 2100 | 7.4 |
| 4 | TiB₂-10%(TZ-3.5Y) | - | 1600 | 2000 | 108 | 2600 | 4.0 |
| 5 | TiB₂-20%(TZ-3.5Y) | - | 1600 | 2000 | 110 | 2450 | 5.5 |
| 6 | TiB₂-30%(TZ-3.5Y) | - | 1600 | 2000 | 100 | 2200 | 6.3 |
| 7 | TiB₂-10%(TZ-3.5Y) | 1800 | 1600 | 2000 | 95 | 2300 | 4.0 |
| 8 | TiB₂-30%(TZ-3.5Y) | 1700 | 1600 | 2000 | 75 | 2000 | 6.6 |
| 9 | TiB₂-30%(TZ-3.5Y) -0.1%SiC | - | 1600 | 2000 | 50 | 2900 | 3.2 |
| 10 | TiB₂-20%(TZ-5.2Y) -35%SiC | - | 1600 | 2000 | 95 | 1700 | 6.5 |
| 11 | TiB₂-20%(TZ-5.2Y) -0.1%SiC | - | 1600 | 2000 | 105 | 2550 | 4.0 |
| TZ-3.5Y ZrO₂ added with 3.5 % by weight of Y₂O₃ TZ-5.2Y ZrO₂ added with 5.2 % by weight of Y₂O₃ TZ-2.8M ZrO₂ added with 2.8 % by weight of MgO TZ-15C ZrO₂ added with 15.5 % by weight of CeO₂ | | | | | | | |

## Claims

1. A ceramic sintered body comprising TiB₂ as the principal component, 0.5 to 30 wt% of SiC and 2 to 40 wt % of ZrO₂, the total content of TiB₂, SiC and ZrO₂ being not less than 80 wt %, the three-point flexural strength of said sintered body being not less than 1078 MPa (110 kg/mm²), and the fracture toughness being not less than 7 MPam^{0.5}.

2. The ceramic sintered body of claim 1 of which the content of SiC is 1 to 10 wt. % and the content of ZrO₂ is 5 to 30 wt. %.

3. The ceramic sintered body of claim 1 wherein the ZrO₂ contains 1 to 8 % of Y₂O₃, 1 to 4 % of MgO and/or 10 to 21 % of CeO₂, as the per cent by weight to ZrO₂.

4. The ceramic sintered body of claim 2 wherein the ZrO₂ contains 3 to 7 % of Y₂O₃ as the per cent by weight to ZrO₂.

5. The ceramic sintered body of claim 1 which further contains 0.5 to 20 wt. % of one or more kinds of the compounds selected from the group consisting of metal carbides other than SiC, metal nitrides, metal carbonitrides and metal borides other than TiB₂.

6. The ceramic sintered body of claim 5 wherein said one or more kinds of the compounds are selected from the group consisting of TiC, VC, ZrC, NbC, Cr₃C₂, TaC, TiN, Ti(CN), TaB₂, ZrB₂ and NbB₂.

7. The ceramic sintered body of claim 5 or claim 6 wherein the ZrO₂ contains 1 to 8 % of Y₂O₃, 1 to 4 % of MgO and/or 10 to 21 % of CeO₂, as the per cent by weight to ZrO₂.

8. The ceramic sintered body of claim 4 which further contains 0.5 to 20 wt. % of one or more kinds of the compounds selected from the group consisting of metal carbides other than SiC, metal nitrides, metal carbonitrides and metal borides other than TiB₂.

9. The ceramic sintered body of claim 8 wherein said one or more kinds of the compounds are selected from the group consisting of TiC, VC, ZrC, NbC, Cr₃C₂, TaC, TiN, Ti(CN), TaB₂, ZrB₂ and NbB₂.

10. A process for producing a ceramic sintered body which comprises, forming a molded body of a mixed powder comprising TiB₂ as the principal component, 0.5 to 30 wt. % of SiC and 2 to 40 wt. % of ZrO₂ having a theoretical density ratio of more than 50 %, sintering the molded body at 1600 to 2000°C under nonoxidizing atmosphere to produce a dense sintered body.

11. The process of claim 10, which further comprises, treating the dense sintered body with hot isostatic pressing at 1450°C to 1800°C at more than 101.3 MPa (100 atm)in an inert gas.

12. A process for producing a ceramic sintered body which comprises, forming a molded body of a mixed powder comprising TiB₂ as the principal component, 0.5 to 30 wt. % of SiC and 2 to 40 wt. % of ZrO₂ having a theoretical density ratio of more than 50 %, and sintering the molded body by encapsulation HIP process where the molded body is sealed with vacuum in a metal or glass capsule and hot isostatic pressing is conducted at 1450 to 1800°C at 101.3 to 202.6 MPa (1000 to 2000 atm).

13. The ceramic sintered body of claim 1 wherein three-point flexural strength is not less than 1275 MPa (130 kgf/mm²).

14. The ceramic sintered body of claim 5 or 8 wherein said one or more kinds of the compounds are selected from the group consisting of TiC, TiN, Ti(CN) and ZrB₂.

## Patentansprüche

1. Gesinterter keramischer Körper umfassend TiB₂ als Hauptbestandteil, 0,5 bis 30 Gew.-% SiC und 2 bis 40 Gew.-% ZrO₂, wobei der Gesamtanteil an TiB₂, SiC und ZrO₂ nicht weniger als 80 Gew.-% beträgt, und wobei die Dreipunkt-Biegefestigkeit dieses gesinterten Körpers nicht weniger als 1078 MPa (110 kg/mm²) und die Bruchzähigkeit nicht weniger als 7 MPam^{0,5} beträgt.

2. Gesinterter keramischer Körper nach Anspruch 1, wobei der Anteil an SiC 1 bis 10 Gew.-% und der Anteil an ZrO₂ 5 bis 30 Gew.-% beträgt.

3. Gesinterter keramischer Körper nach Anspruch 1, wobei das ZrO₂ 1 bis 8% Y₂O₃, 1 bis 4% MgO und/oder 10 bis 21% CeO₂ in Gewichtsprozent zum ZrO₂ enthält.

4. Gesinterter keramischer Körper nach Anspruch 2, wobei das ZrO₂ 3 bis 7% Y₂O₃ in Gewichtsprozent zu ZrO₂ enthält.

5. Gesinterter keramischer Körper nach Anspruch 1, des weiteren enthaltend 0,5 bis 20 Gew.-% eines oder mehrerer Arten der Verbindungen, ausgewählt aus der Gruppe bestehend aus anderen Metallcarbiden als SiC, Metallnitriden, Metallcarbonitriden und anderen Metallboriden als TiB₂.

6. Gesinterter keramischer Körper nach Anspruch 5, wobei diese eine oder mehrere Art(en) von Verbindungen ausgewählt wird aus der Gruppe bestehend aus TiC, VC, ZrC, NbC, Cr₃C₂, TaC, TiN, Ti(CN), TaB₂, ZrB₂ und NbB₂.

7. Gesinterter keramischer Körper nach Anspruch 5 oder 6, wobei ZrO₂ 1 bis 8 Gew.-% Y₂O₃, 1 bis 4 Gew.-% MgO und/oder 10 bis 21 Gew.-% CeO₂ in Gewichtsprozent zum ZrO₂ enthält.

8. Gesinterter keramischer Körper nach Anspruch 4, des weiteren enthaltend 0,5 bis 20 Gew.-% einer oder mehrerer Art(en) der Verbindungen, ausgewählt aus der Gruppe, bestehend aus anderen Metallcarbiden als SiC, Metallnitriden, Metallcarbonitriden und anderen Metallboriden als TiB₂.

9. Gesinterter keramischer Körper nach Anspruch 8, wobei diese eine oder mehrere Arten der Verbindungen ausgewählt werden aus der Gruppe bestehend aus TiC, VC, ZrC, NbC, Cr₃C₂, TaC, TiN, Ti(CN), TaB₂, ZrB₂ und NbB₂.

10. Verfahren zur Herstellung eines gesinterten keramischen Körpers, umfassend das Bilden eines Formkörpers aus einem gemischten Pulver umfassend TiB₂ als Hauptkomponente, 0,5 bis 30 Gew.-% SiC und 2 bis 40 Gew.-% ZrO₂, mit einem theoretischen Dichteverhältnis von mehr als 50%, Sintern des geformten Körpers bei 1600 bis 2000°C unter nichtoxidierender Atmosphäre um einen dichten gesinterten Körper zu erzeugen.

11. Verfahren nach Anspruch 10, des weiteren umfassend das Behandeln des dichten gesinterten Körpers mit heißisostatischem Pressen bei 1450°C bis 1800°C bei mehr als 101,3 MPa (100 atm) in einem Edelgas.

12. Verfahren zur Herstellung eines gesinterten keramischen Körpers umfassend das Bilden eines Formkörpers aus einem gemischten Pulver umfassend TiB₂ als Hauptkomponente, 0,5 bis 30 Gew.-% SiC und 2 bis 40 Gew.-% ZrO₂, mit einem theoretischen Dichteverhältnis von mehr als 50%, und Sintern des geformten Körpers durch ein Kapsel-HIP-Verfahren, bei welchem der Formkörper unter Vakuum in einer Metall- oder Glaskapsel eingeschlossen wird und das heißisostatische Pressen bei 1450 bis 1800°C bei 101,3 bis 202,6 MPa (1000 bis 2000 atm) durchgeführt wird.

13. Gesinterter keramischer Körper nach Anspruch 1, wobei die Dreipunkt-Biegefestigkeit nicht weniger als 1275 MPa (130 kgf/mm²) beträgt.

14. Gesinterter keramischer Körper nach Anspruch 5 oder 8, wobei diese eine oder mehreren Arten der Verbindungen ausgewählt werden, aus der Gruppe bestehend aus TiC, TiN, Ti(CN) und ZrB₂.

## Revendications

1. Corps céramique fritté comprenant TiB₂ comme composant principal, de 0,5 à 30 % en poids de SiC et de 2 à 40 % en poids de ZrO₂ , la teneur totale en TiB₂ , SiC et ZrO₂ n'étant pas inférieur à 80 % en poids, la résistance à la flexion en trois points dudit corps fritté n'étant pas inférieure à 1078 MPa (110 kg/mm²), et la résistance à la fracture n'étant pas inférieure à 7 MPam^{0,5}.

2. Corps céramique fritté de la revendication 1 dont la teneur en SiC est de 1 à 10 % en poids et la teneur en ZrO₂ est de 5 à 30 % en poids .

3. Corps céramique fritté de la revendication 1 dans lequel le ZrO₂ contient de 1 à 8 % d'Y₂O₃ , de 1 à 4 % de MgO et/ou de 10 à 21 % de Ceo₂ , comme pourcentage pondéral par rapport à ZrO₂ .

4. Corps céramique fritté de la revendication 2 dans lequel ZrO₂ contient de 3 à 7 % d'Y₂O₃ comme pourcentage en poids par rapport à ZrO₂ .

5. Corps céramique fritté de la revendication 1 qui contient en outre de 0,5 à 20 % en poids d'un ou plusieurs types des composés choisis dans le groupe constitué par les carbures métalliques autres que SiC, les nitrures métalliques, les carbonitrures métalliques, et les borures métalliques autres que TiB₂ .

6. Corps céramique fritté de la revendication 5 dans lequel lesdits (un ou plusieurs) types de composés sont choisis dans la groupe constitué par TiC, VC, ZrC, NbC, Cr₃C₂, TaC, TiN, Ti(CN), TaB₂, ZrB₂, et NbB₂.

7. Corps céramique fritté de la revendication 5 ou de la revendication 6 dans lequel le ZrO₂ contient de 1 à 8 % d'Y₂O₃ , de 1 à 4 % de MgO et/ou de 10 à 21 % de CeO₂ comme pourcentage pondéral par rapport à ZrO₂ .

8. Corps céramique fritté de la revendication 4 qui contient en outre de 0,5 à 20 % en poids d 'un ou plusieurs types de composés choisis dans le groupe constitué par les carbures métalliques autres que SiC, les nitrures métalliques, les carbonitrures métalliques, et les borures métalliques autres que TiB₂ .

9. Corps céramique fritté de la revendication 8 dans lequel lesdits (un ou plusieurs) types de composés sont choisis dans le groupe constitué par TiC, VC, ZrC, NbC, Cr₃C₂, TaC, TiN, Ti(CN), TaB₂, ZrB₂ et NbB₂.

10. Procédé de préparation d'un corps céramique fritté dans lequel on forme un corps moulé d'une poudre mixte comprenant TiB₂ comme composant principal, de 0,5 à 30 % en poids de SiC et de 2 à 40 % en poids de ZrO₂ ayant un rapport de densité théorique supérieur à 50 % , on fritte le corps moulé entre 1600 et 2000°C dans une atmosphère non oxydante pour produire un corps fritté dense.

11. Procédé de la revendication 10 qui comprend en outre le traitement du corps dense fritté avec un pressage isostatique à chaud entre 1450°C et 1800°C à plus de 101,3 MPa (100 atm) dans un gaz inerte.

12. Procédé de préparation d'un corps céramique fritté dans lequel on forme un corpsmoulé d'une poudre mixte comprenant TiB₂ comme composant principal, de 0,5 à 30 % en poids de SiC et de 2 à 40 % en poids de ZrO₂ ayant un rapport de densité théorique supérieur à 50%, et on fritte le corps moulé par un procédé d'encapsulation HIP dans lequel le corps moulé est scellé sous vide dans une capsule de métal ou de verre, et l'on effectue un pressage isostatique à chaud entre 1450 et 1800°C à 101,3 à 202,6 MPa (1000 à 2000 atm).

13. Corps céramique fritté de la revendication 1 dans lequel la résistance à la flexion en trois points n'est pas inférieure à 1275 MPa (130 kgf/mm²).

14. Corps céramique fritté de la revendication 5 ou 8 dans lequel lesdits (un ou plusieurs types) de composés sont choisis dans le groupe constitué par TiC, TiN, Ti(CN) et ZrB₂.
